# EUROPÄISCHE PATENTSCHRIFT

(11) **EP 0 355 672 B1**
(45) Veröffentlichungstag und Bekanntmachung des Hinweises auf die Patenterteilung: **18.05.1994**
(21) Anmeldenummer: 89115058.3
(22) Anmeldetag: 16.08.1989
(51) Int. Cl.: G02C 7/10, G02B 5/20

(54) **Sonnenschutzfilter**
Filter for protection against the sun
Filtre protecteur contre le soleil

(30) Priorität: 20.08.1988 DE 3828382
(43) Veröffentlichungstag der Anmeldung: 28.02.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Grimm, Wolfgang, Dr., D-7920 Heidenheim (DE); Winter, Karl-Heinz, D-7080 Aalen (DE)

(56) Entgegenhaltungen:
- WO-A-87/01817
- US-A- 3 382 183
- US-A- 3 516 720
- US-A- 4 022 628
- US-A- 4 045 125

## Beschreibung

Die vorliegende Erfindung betrifft ein Sonnenschutzfilter zum Schutz des Auges vor schädlicher und störender Strahlung.

Solche Sonnenschutzfilter finden in Sonnenschutzbrillen Verwendung und dienen dazu Strahlung aus dem ultravioletten Spektralbereich möglichst vollständig zu absorbieren und die Blendungsgefahr für Strahlen aus dem sichtbaren Spektralbereich auf ein Mindestmaß zu begrenzen. Dabei muß jedoch die Filtercharakteristik so beschaffen sein, daß die sogenannte Signallichterkennung gewährleistet ist. Nach den Anforderungen der ISO "Specification for afocal filters for daylight" (8/87) bedeutet dies, daß Licht aus dem grün-gelb-roten Spektralbereich höchstens zu 80% gedämpft werden darf. Nach einer - erdteilweise unterschiedlichen - Normung soll auch die Erkennung von blauem Licht (z.B. von Polizei- und Rettungsfahrzeugen) möglich sein.

Sonnenschutzfilter werden aus Glas oder einem transparenten Kunststoff, z.B. dem unter der Handelsbezeichnung CR 39 erhältlichen Kunststoff gefertigt. Dieses Material kann in der Masse gefärbt sein, zum überwiegenden Teil wird jedoch eine, die spektrale Transmission bestimmende Schicht auf das Grundmaterial aufgetragen. Diese Schicht kann aus aufgedampften dünnen Interferenzschichten bestehen, sie kann jedoch bei Filtern aus Kunststoff auch durch Tauchen in ein Farbbad hergestellt werden. Dabei lagern sich Farbmoleküle in oberflächennahe Schichten des Kunststoffes ein. Die spektrale Transmission solcher Schutzfilter aus Kunststoff wird dann allein durch die spektrale Absorption der eingebrachten Farbschicht bestimmt.

Bei Sonnenschutzfiltern wird die Kennzahl der Absorption bzw. Transmission durch Faltung mit der durch Normung festgelegten spektralen Hellempfindlichkeitskurve (v_{λ} -Kurve) bestimmt. Praktisch gibt es solche Filter mit einer Absorption von 85%, 65% bis ca. 40%.

Die bisher beispielsweise aus US-A-3,516,720 oder US-A-4,045,125 bekannten Sonnenschutzfilter haben für Strahlung der Wellenlänge λ < 350 nm praktisch eine Transmission T_{λ} von 0. Danach steigt die Transmission mit zunehmender Wellenlänge quasi-linear an und bleibt im Bereich 450 < λ < 780 nm nahezu konstant auf dem Maximalwert. Im allgemeinen bleibt auch für λ > 780 nm die Transmission bis über 800 nm noch konstant und nimmt erst dann, vorwiegend bedingt durch die Absorption des Filtermaterials im IR-Bereich wieder ab.

Es hat sich gezeigt, daß diese bekannten Sonnenschutzgläser die Kontrast-Empfindlichkeit insbesondere bei niedrigen Leuchtdichten negativ beeinflussen und daß unter bestimmten Lichtverhältnissen, wie z.B. bei diesigem Wetter oder bei indirekter Beleuchtung eine störende Schleierleuchtdichte auftritt. Diese Nachteile wirken sich auf die Akzeptanz solcher Schutzgläser negativ aus.

Es ist nun die Aufgabe der vorliegenden Erfindung ein Sonnenschutzfilter zum Schutz des Auges vor schädlicher und störender Strahlung zu schaffen, das sich durch eine stark verbesserte Kontrast-Empfindlichkeit auszeichnet. Diese Steigerung der Kontrast-Empfindlichkeit soll sich vor allem auch bei mittleren Leuchtdichten und bei ungünstigen Lichtverhältnissen auswirken.

Erfindungsgemäß wird diese Aufgabe durch ein Sonnenschutzfilter gelöst, dessen spektrale Verteilung der Transmission (T_{λ}) in Abhängigkeit von der Wellenlänge (λ) der auftreffenden Strahlung nach den kennzeichnenden Merkmalen, a bis d des Anspruches 1 gestaltet ist.

Wie aus diesen Merkmalen zu erkennen ist, ist bei dem Sonnenschutzfilter nach der Erfindung die Transmission für den kurzwelligen Anteil der Strahlung besonders deutlich herabgesetzt. Dadurch ergibt sich uberraschend eine wesentliche Steigerung der Kontrastempfindlichkeit und eine verbesserete Akzeptanz und Verträglichkeit der Sonnenschutzfilter. Die Steigerung der Kontrast-Empfindlichkeit ist, wie Untersuchungen im Zusammenhang mit der Erfindung ergeben haben unter anderem darauf zurückzuführen, daß die Augenmedien im kurzwelligen Bereich des Lichtes streuen und daß diese Streuung zu Blenderscheinungen und Störungen führt. Eine besonders deutliche Dämpfung dieses Spektralbereiches wirkt sich also auf die Kontrast-Empfindlichkeit positiv aus. Bei kurzwelligem Licht tritt außerdem eine Wechselwirkung zwischen dem photopischen und dem skotopischen System des Auges auf, die insbesondere bei mittleren und niedrigen Leuchtdichten zu einer Verschlechterung der Kontrast-Empfindlichkeit führt.

Mit dem Sonnenschutzfilter nach der vorliegenden Erfindung läßt sich also gegenüber bekannten Filtern die Kontrast-Empfindlichkeit und insbesondere auch die Kontrast-Empfindlichkeit bei mittleren Leuchtdichten verbessern.

Ein nach der Erfindung ausgebildetes Sonnenschutzfilter hat nach einem bevorzugten Ausführungsbeispiel eine rotbraune Tönung. Selbst wenn ein solches Filter mit einer, in üblicherweise durch Faltung mit der V_{λ} -Kurve bestimmten Absorption von 80-85% ausgebildet ist, hat es doch für den Benutzer die subjektive Wirkung wie ein Graufilter einer Absorption von 50%. Daraus ist ersichtlich, daß ein nach der Erfindung ausgebildetes Sonnenschutzfilter für den Benutzer überaus angenehm zu tragen ist. Das Sonnenschutzfilter nach der Erfindung verfälscht für den Benutzer die Farben nur geringfügig und erfüllt alle Vorschriften bezüglich der Signallichterkennung gemäß ISO "Specification for afocal filters for daylight", Test nach Methode B.

Bei einem nach Anspruch 2 ausgebildeten Sonnenschutzfilter ist der kurzwellige Anteil des Lichtes dadurch noch stärker herabgesetzt, daß die Transmission für Wellenlängen bis 380 nm auf Werte < 1% reduziert ist.

Anspruch 3 gibt eine vorteilhafte Ausgestaltung des Sonnenschutzfilters nach der Erfindung an, bei der die Transmission für Wellenlängen oberhalb des sichtbaren Bereiches d.h. für λ > 780 nm auf Werte < 1% herabgesetzt wird. Dadurch wird das Auge auch vor Strahlung aus dem kurzwelligen Infrarot-Bereich geschützt. Die Ansprüche 4 - 9 beziehen sich auf Materialien für das Sonnenschutzfilter und auf die Art der Ausbildung der spektralen Transmission.

Die Figuren 1-3 der beigefügten Zeichnungen dienen zur weiteren Erläuterung der Erfindung:

Es zeigen:
- Figur 1: die spektrale Transmission eines nach einem ersten Ausführungsbeispiel ausgebildeten Sonnenschutzfilters nach der Erfindung;
- Figur 2: die spektrale Transmission für ein zweites Ausführungsbeispiel;
- Figur 3: die internationale spektrale Helligkeitskurve, d.h. die V_{λ} -Kurve.

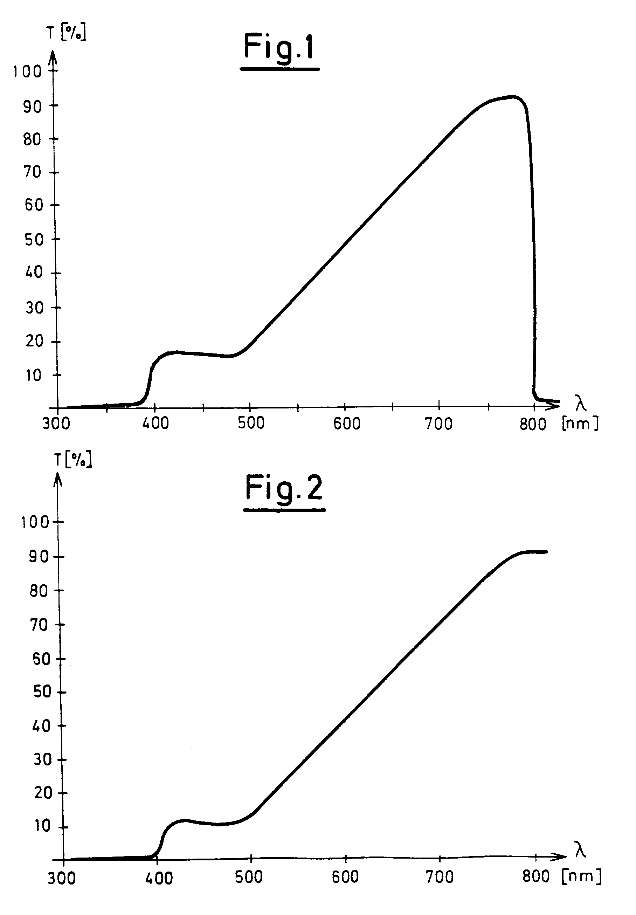

Bei dem Ausfuhrungsbeispiel der Figur 1 hat das Sonnenschutzfilter für Wellenlangen λ < 380 nm eine Transmission < 1%, d.h. es absorbiert die in diesem Bereich liegende UV-Strahlung nahezu vollständig. Oberhalb λ = 380 nm steigt die spektrale Transmission (T_{λ}) bis etwaλ = 400 nm schnell auf einen Wert von ca. 15% an. Dieser Wert bleibt bis λ = 500 nm etwa konstant, so daß die Erkennbarkeit für Signallichter nach ISO "Specification for afocal filters for daylight", Test nach Methode B, gewährleistet ist. Oberhalb λ = 500 nm steigt die Transmission, ausgehend vom Wert für T₅₀₀ vorzugsweise linear mit der Wellenlänge (λ) auf ihren Höchstwert an. Der gezeichnete lineare Anstieg ist idealisiert; in Wirklichkeit läßt sich ein tatsächlicher linearer Anstieg kaum erreichen. Der Anstieg sollte aber so linear wie moglich sein um Farbverfälschungen durch das Sonnenschutzfilter zu vermeiden.

Der Maximalwert der Transmission (T_{λ}) wird im Beispiel bei λ ≈ 700 nm erreicht. Dieser Wert bleibt bis an den Rand des sichtbaren Spektralbereiches bei λ = 780 nm angenähert konstant und fällt dann bis etwa λ = 820 nm auf Werte < 1% ab.

Ein solcher Verlauf der spektralen Transmission läßt sich für Sonnenschutzfilter aus Glas durch Beschichten mit dünnen Interferenzschichten erreichen. Dabei ist es möglich auf beide Seiten des Sonnenschutzfilters Schichten aufzubringen, welche unterschiedliche Aufgaben erfüllen. Solche Schichten sind heute in ihrer Zusammensetzung und Dicke so berechenbar, daß ein vorbestimmter Verlauf der T_{λ} -Kurve erreicht wird und die Herstellung solcher Schichten ist in computergesteuerten Aufdampfanlagen möglich.

Auch Schutzfilter aus Kunststoff lassen sich auf diese Weise beschichten. Allerdings ist es für Filter aus Kunststoff kostengunstiger die spektrale Transmission durch Tauchen in ein entsprechendes Farbbad zu erreichen. Dabei lagern sich Farbmoleküle in oberflächennahe Schichten des Filters ein. Es ist auch möglich den Färbevorgang so zu steuern, daß das Filter durchgefärbt wird. Damit wird die UV-Stabilität des Filters verbessert.

Die geeignete Zusammensetzung des Farbbades läßt sich durch Rechnung oder Versuche ermitteln, wobei sogenannte Dispersionsfarbstoffe Verwendung finden.

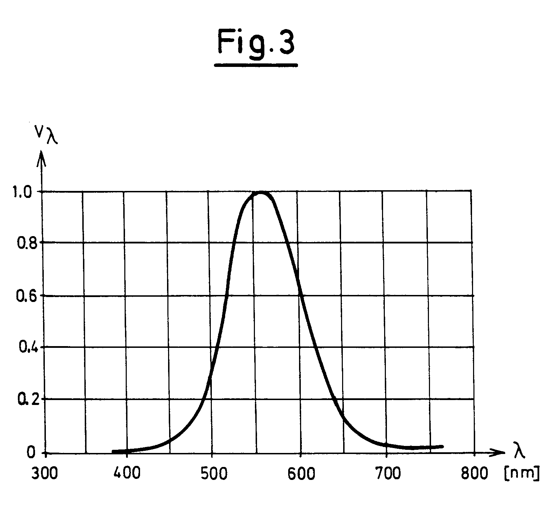

Ein Sonnenschutzfilter nach Figur 1 hat eine Absorption von ca. 65 - 85%. Diese Absorption wird in bekannter Weise durch Faltung mit der in Figur 3 gezeichneten V_{λ} -Kurve ermittelt. Trotzdem wirkt dieses Schutzfilter für den Träger subjektiv wie ein Graufilter mit 50% Absorption; der Träger kommt in den Genuß einer sehr guten Kontrast-Empfindlichkeit auch für mittlere und niedrige Leuchtdichten ohne daß eine störende Farbverfälschung der beobachteten Szene auftritt.

Bei dem in Figur 2 dargestellten Ausführungsbeispiel ist die Transmission für Wellenlängen λ < 400 nm auf Werte < 1% herabgesetzt, steigt dann an und erreicht im Bereich 410 < λ < 500 nm einen Wert von ca. 12%. Danach steigt die spektrale Transmission mit der Wellenlänge möglichst linear an, erreicht bei etwa λ = 780 nm ihren Maximalwert, den sie auch für λ > 780 nm behält. Oberhalb λ = 800 nm d.h. im IR-Bereich sinkt dann die Transmission, bedingt durch die verminderte IR-Durchlässigkeit des Filtermaterials wieder ab.

Die in den Figuren 1 und 2 dargestellten spektralen Transmissionskurven sind nur Beispiele, welche dazu dienen den prinzipiellen Verlauf dieser Kurve zu zeigen.

## Patentansprüche

1. Sonnenschutzfilter zum Schutz des Auges vor schädlicher und störender Strahlung, gekennzeichnet durch folgende spektrale Verteilung der Transmission (T_{λ}) in Abhängigkeit von der Wellenlänge (λ) der auftreffenden Strahlung
a) T_{λ} ≦ 1% im Bereiche λ < 350 nm
b) T_{λ} < 20% im Bereich 350 < λ < 400 nm
c) 5 < T_{λ} < 30% im Bereich 400 < λ < 500 nm
d) T_{λ}, ausgehend vom Wert für T₅₀₀ angenähert linear ansteigend mit λ im Bereich 500 < λ < 700 nm.

2. Schutzfilter nach Anspruch 1, gekennzeichnet durch folgende spektrale Verteilung in den Bereichen a) und b):
a) T_{λ} ≦ 1 % im Bereich λ < 380 nm
b) T_{λ} < 20 % im Bereich 380 nm < λ < 400 nm.

3. Sonnenschutzfilter nach Anspruch 1 oder 2, dadurch gekennzeichnet, daß im Bereich 780 < λ < 850 nm die Transmission (T_{λ}) auf den Wert < 1% abfällt.

4. Sonnenschutzfilter nach einem der Ansprüche 1-3, dadurch gekennzeichnet, daß das Filter aus transparentem Material besteht, das in der Masse gefärbt ist.

5. Sonnenschutzfilter nach einem der Ansprüche 1-3, dadurch gekennzeichnet, daß das Filter aus transparentem Material besteht, dessen spektrale Transmission (T_{λ}) durch aufgebrachte Schichten bestimmt ist.

6. Sonnenschutzfilter nach Anspruch 4 oder 5, dadurch gekennzeichnet, daß das Material Glas ist.

7. Sonnenschutzfilter nach Anspruch 4 oder 5, dadurch gekennzeichnet, daß das Material ein transparenter Kunststoff ist.

8. Sonnenschutzfilter nach einem der Ansprüche 1 - 3, dadurch gekennzeichnet, daß das Filter aus transparentem Kunststoff besteht, dessen spektrale Transmission (T_{λ}) durch Einbringen von Farbmolekülen in oberflächennahe Schichten bestimmt ist.

9. Sonnenschutzfilter nach einem oder mehreren der Ansprüche 1 - 8, dadurch gekennzeichnet, daß die in bekannter Weise durch Faltung mit der spektralen Hellempfindlichkeitskurve (V_{λ} - Kurve) bestimmte Transmission T > 3% ist.

## Claims

1. Solar protective filter for protecting the eye against demaging and distrurbing radiation, characterised in the following spectral distribution of the transmission (Tₗ) in dependence upon the wavelength l of the incident radiation
a) Tₗ ≦ 1% in the range l < 350 nm;
b) Tₗ < 20% in the range 350 nm < l < 400 nm;
c) 5 < Tₗ < 30% in the range 400 nm < l < 500 nm; and
d) Tₗ, starting from the value T₅₀₀ increasing approximately linear with l in the range of 500 nm < l < 700 nm.

2. Solar protective filter of claim 1, characterised in the range of the following spectral distribution in a) and b)
a) Tₗ ≦ 1% in the range l < 380 nm;
b) Tₗ < 20% in the range 380 nm < l < 400 nm;

3. Solar protective filter of claim 1 or 2, wherein the transmission Tₗ drops to the value < 1 % in the range 780 nm < l < 850 nm.

4. Solar protective filter of claim 1 - 3, wherein the filter is made of transparent material which is dyed as a mass.

5. Solar protective filter of claim 1 - 3, wherein the filter comprises transparent material having a spectral transmission (Tₗ) determined by coatings applied thereto.

6. Solar protective filter of claim 4 or 5, wherein the material being glass.

7. Solar protective filter of claim 4 or 5, wherein the material being transparent plastic.

8. Solar protective filter of claim 1 - 3, wherein the filter comprising transparent plastic having a spectral transmission (Tₗ) which is determined by introducing dye molecules into the layer near the surface.

9. Solar protective filter of claim 1 - 8, wherein the transmission is determined in a known manner through convolution with the spectral photopic spectral response curve (Vₗ-curve) for the condition that T < 3 %.

## Revendications

1. Filtre de protection solaire servant à protéger les yeux des rayonnements nocifs et gênants, caractérisé par la distribution spectrale suivante de la transmission (T_{λ}) en fonction des longueurs d'onde (λ) du rayonnement incident
a) T_{λ} ≦ 1 % dans le domaine λ < 350 nm
b) T_{λ} < 20 % dans le domaine 350 < λ < 400 nm
c) 5 < T_{λ} < 30 % dans le domaine 400 < λ < 500 nm
d) T_{λ}, croissant à peu près linéairement avec λ à partir de la valeur pour T₅₀₀ dans le domaine 500 < λ < 700 nm.

2. Filtre de protection selon la revendication 1, caractérisé par la répartition spectrale suivante dans les régions a) et b) :
a) T_{λ} ≦ 1 % dans la région λ < 380 nm
b) T_{λ} < 20 % dans la région 380 nm < λ < 400 nm.

3. Filtre de protection selon la revendication 1 ou 2, caractérisé en ce que, dans la région 780 < λ < 850 nm, la transmission (T_{λ}) tombe à la valeur <1 %.

4. Filtre de protection solaire selon l'une des revendications 1 à 3, caractérisé en ce que le filtre est composé d'une matière transparente qui est colorée dans la masse.

5. Filtre de protection solaire selon une des revendications 1 à 3, caractérisé en ce que le filtre est composé d'une matière transparente dont la transmission spectrale (T_{λ}) est déterminée par des couches appliquées.

6. Filtre de protection solaire selon la revendication 4 ou 5, caractérisé en ce que la matière est le verre.

7. Filtre de protection solaire selon la revendication 4 ou 5, caractérisé en ce que la matière est une matière plastique transparente.

8. Filtre de protection solaire selon une des revendications 1 à 3, caractérisé en ce que le filtre est composé d'une matière plastique transparente dont la transmission spectrale (T_{λ}) est déterminée par l'introduction de molécules colorantes dans les couches proches de la surface.

9. Filtre de protection solaire selon une ou plusieurs des revendications 1 à 8, caractérisé en ce que la transmission T > 3% est déterminée d'une façon connue par intersection avec la courbe spectrale de sensibilité à la lumière (courbe V_{λ}).
